# EUROPEAN PATENT APPLICATION

(11) **EP 4 575 937 A1**
(43) Date of publication of application: **25.06.2025**
(21) Application number: 24212653.0
(22) Date of filing: 13.11.2024
(51) Int. Cl.: G06N 20/00

(54) **MACHINE LEARNING SYSTEM AND MACHINE LEARNING METHOD**

(30) Priority: 20.12.2023 JP 2023214388
(71) Applicant: Prime Planet Energy & Solutions, Inc., Chuo-ku, Tokyo 103-0022 (JP)
(72) Inventor: KUMAGAI, Naoki, Tokyo, 103-0022 (JP)
(74) Representative: Kuhnen & Wacker Patent- und Rechtsanwaltsbüro PartG mbB

(57) **Abstract**

A machine learning system includes a display device and a learning device. The learning device causes a variable selection section (83) in a learning execution screen (70a) of the display device to display a result of extracting candidate explanatory variables and candidate objective variables from a target file designated by a user. The learning device causes a result display section (85) in the learning execution screen (70a) to display a result of analyzing, by machine learning, a relation between an explanatory variable and an objective variable selected by the user from among the candidate explanatory variables and the candidate objective variables displayed in the variable selection section (83).

## Description

### CROSS REFERENCE TO RELATED APPLICATIONS

This nonprovisional application is based on Japanese Patent Application No. 2023-214388 filed on December 20, 2023 with the Japan Patent Office, the entire contents of which are hereby incorporated by reference.

### BACKGROUND OF THE INVENTION

### Field of the Invention

The present disclosure relates to a machine learning system and a machine learning method.

### Description of the Background Art

Japanese Patent Laying-Open No. 2023-34011, for example, describes a technique for optimizing control parameters in a battery manufacturing process using machine learning.

### SUMMARY OF THE INVENTION

Generally, in machine learning, a relation between an explanatory variable (input) and an objective variable (output) is learned using a predetermined algorithm. Conventionally, machine learning requires complicated coding and specialized knowledge, which is not user-friendly.

The present disclosure has been made to solve the above-described problem, and an object of the present disclosure is to enable machine learning with simple operations.

(Clause 1) A machine learning system according to the present disclosure includes a display device, and a learning device connected to the display device. The learning device causes the display device to display a result of extracting candidate explanatory variables and candidate objective variables from a target file designated by a user, and causes the display device to display a result of analyzing, by machine learning, a relation between an explanatory variable and an objective variable selected by the user from among the candidate explanatory variables and the candidate objective variables displayed on the display device.

(Clause 2) In the machine learning system according to clause 1, the learning device generates, by executing machine learning as to the explanatory variable and the objective variable selected by the user according to a plurality of algorithms, a plurality of prediction models, each for predicting an objective variable from an explanatory variable, calculates a determination coefficient of each of the plurality of generated prediction models, and causes the display device to display a prediction model having a highest determination coefficient as a best model.

(Clause 3) In the machine learning system according to clause 2, the learning device causes the display device to display the plurality of algorithms, and causes the display device to display information on the best model or information on a selection model, the selection model being a prediction model according to an algorithm selected by the user from among the plurality of algorithms displayed on the display device.

(Clause 4) In the machine learning system according to clause 3, the learning device obtains an explanatory variable inputted by the user, and causes the display device to display a result of calculating, using the best model or the selection model, an objective variable corresponding to the explanatory variable inputted by the user.

(Clause 5) In the machine learning system according to any one of clauses 1 to 4, the learning device obtains a division ratio of training data and test data requested by the user, and causes the display device to display a result of executing the machine learning by dividing data included in the target file into training data and test data at the obtained division ratio.

(Clause 6) In the machine learning system according to any one of clauses 1 to 4, the explanatory variable is a variable related to a material of a battery, and the objective variable is a variable related to a characteristic of the battery.

(Clause 7) A machine learning method according to the present disclosure includes: causing a display device to display a result of extracting candidate explanatory variables and candidate objective variables from a target file designated by a user; and causing the display device to display a result of analyzing, by machine learning, a relation between an explanatory variable and an objective variable selected by the user from among the candidate explanatory variables and the candidate objective variables displayed on the display device.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram schematically showing an overall configuration of a machine learning system.
Fig. 2 is a diagram schematically showing an exemplary learning execution screen displayed on a display device.
Fig. 3 is a diagram schematically showing an exemplary learning utilization screen displayed on the display device.
Fig. 4 is a flowchart showing an overview of a procedure executed by a learning device in a learning phase.
Fig. 5 is a flowchart showing an overview of a procedure executed by the learning device in a utilization phase.

### DESCRIPTION OF THE PREFERRED EMBODIMENTS

Embodiments of the present disclosure are described in detail with reference to the drawings. The same or corresponding parts in the drawings are denoted by the same reference characters and description thereof will not be repeated.

### [System Configuration]

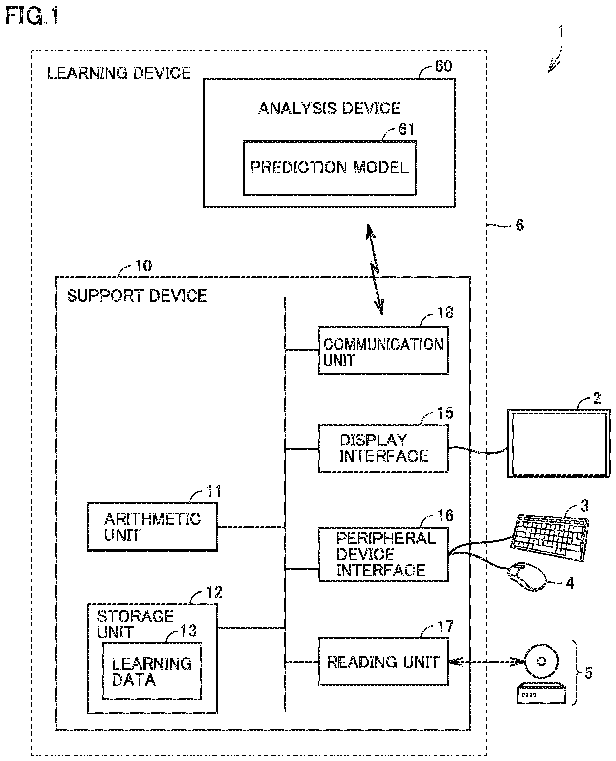

Fig. 1 is a diagram schematically showing an overall configuration of a machine learning system 1 according to the present embodiment.

Machine learning system 1 includes a display device 2, a keyboard 3, a mouse 4, a removable disc 5, and a learning device 6.

Learning device 6 is a device that executes machine learning. Learning device 6 includes a support device 10 and an analysis device 60. Analysis device 60 is a device that actually executes machine learning and analyzes a result of the learning. Support device 10 is a device for supporting the use of machine learning by analysis device 60.

Support device 10 includes, as main hardware elements, an arithmetic unit 11, a storage unit 12, a display interface 15, a peripheral device interface 16, a reading unit 17, and a communication unit 18. Support device 10 may be implemented, for example, by a general-purpose computer or by a dedicated computer that supports machine learning.

Arithmetic unit 11 is an arithmetic circuit (arithmetic device) that performs various types of processing by executing various programs, and is an example of a computer. Arithmetic unit 11 is configured as, for example, a central processing unit (CPU). All or some of the functions of arithmetic unit 11 may be provided in a server device (e.g., a cloud-type server device) which is not shown.

Storage unit 12 stores a program code, a work memory and the like when arithmetic unit 11 executes an arbitrary program. Storage unit 12 stores learning data 13 used for machine learning by analysis device 60. Learning data 13 includes a plurality of combinations of an explanatory variable and an objective variable.

Display interface 15 is an interface for connecting display device 2, and implements input and output of data between support device 10 and display device 2.

Peripheral device interface 16 is an interface for connecting peripheral devices such as keyboard 3 and mouse 4, and implements input and output of data between support device 10 and the peripheral devices.

Reading unit 17 reads various types of data stored on removable disc 5 which is a storage medium. For example, learning data 13 is read from removable disc 5 by reading unit 17 and stored in storage unit 12.

Communication unit 18 transmits and receives data to and from analysis device 60 through wired communication or wireless communication.

When analysis device 60 receives a learning command from support device 10, analysis device 60 executes machine learning based on the received learning command and analyzes a result of the learning. The learning command includes, in addition to above-described learning data 13, information of a division ratio of learning data 13. The division ratio of learning data 13 is a ratio at which data of the plurality of combinations of the explanatory variable and the objective variable included in learning data 13 is divided into training data (data used for generating a prediction model 61) and test data (data used for verifying prediction model 61).

Analysis device 60 can generate prediction model 61 using machine learning (a learning phase), and perform various types of processing by utilizing generated prediction model 61 (a utilization phase). Prediction model 61 is a model for predicting an objective variable from an explanatory variable. When an explanatory variable is inputted, prediction model 61 outputs a value of an objective variable corresponding to the inputted explanatory variable.

When analysis device 60 receives a learning command from support device 10 in the learning phase, analysis device 60 reads learning data 13 included in the learning command and automatically performs preprocessing operations on the learning data. For example, if there is a missing value in read learning data 13, analysis device 60 performs, as one of the preprocessing operations, a process of compensating for the numerical value with similar data. Analysis device 60 divides the preprocessed learning data into the training data and the test data at the division ratio included in the learning command. Analysis device 60 then generates prediction model 61 that predicts a relation between the explanatory variable and the objective variable included in the training data. For example, the explanatory variable is a variable related to a material of a battery, and the objective variable is a variable related to a characteristic of the battery. By setting the variables in this manner, prediction model 61 that predicts a relation between the material of the battery and the characteristic of the battery can be generated.

Each prediction model 61 is generated using each of a plurality of algorithms. That is, analysis device 60 generates a plurality of prediction models 61 using a plurality of algorithms. Then, analysis device 60 verifies generated prediction models 61 using the test data. Further, analysis device 60 analyzes generated prediction models 61 (calculates a correlation coefficient, a determination coefficient and the like). Methods for generating, verifying and analyzing the prediction models by analysis device 60 are similar to known methods. Therefore, detailed description about them will not be repeated herein.

When analysis device 60 receives a utilization command including a value of the explanatory variable from support device 10 in the utilization phase, analysis device 60 calculates, using prediction model 61, a predicted value of the objective variable for the value of the explanatory variable included in the utilization command, and transmits the calculated predicted value of the objective variable to support device 10.

### [Support of Machine Learning]

Conventional machine learning tools require specialized knowledge such as complicated coding and machine learning processes. These tools are not user-friendly, however, because it is difficult for a general user to learn specialized knowledge of machine learning in advance.

Therefore, learning device 6 according to the present embodiment assists the user in readily executing machine learning and utilizing a machine learning result with simple operations.

### <Learning phase (Phase of Execution of Machine Learning)>

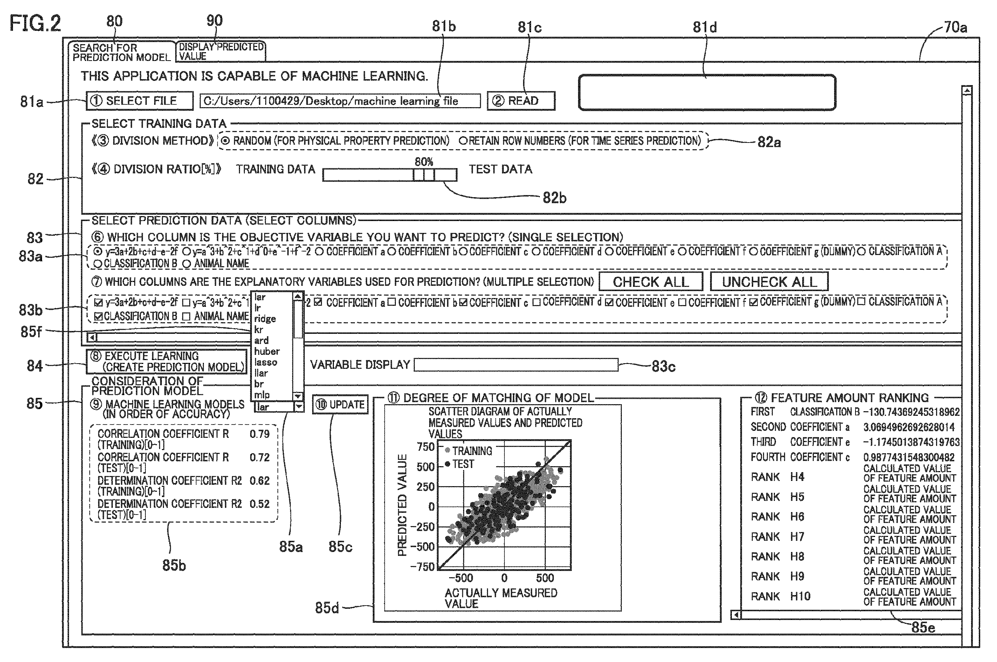

Fig. 2 is a diagram schematically showing an exemplary learning execution screen 70a displayed on display device 2. Learning device 6 causes display device 2 to display learning execution screen 70a shown in Fig. 2. The user only needs to perform simple operations according to content displayed on learning execution screen 70a, without performing any complicated coding and the like, to execute machine learning with learning device 6. The content displayed on learning execution screen 70a and the operations performed by the user while the user views learning execution screen 70a are described below.

### (1) Designation of Target File

At the top of learning execution screen 70a, a tab 80 labeled "Search for prediction model" and a tab 90 labeled "Display predicted value" are displayed in a selectable manner. When the user performs an operation of selecting tab 80, learning execution screen 70a shown in Fig. 2 is displayed on a screen of display device 2.

A file selection icon 81a, a path display section 81b, and a read icon 81c are displayed below tabs 80 and 90. When the user performs an operation of placing a cursor on file selection icon 81a and clicking on it, a storage destination and a file name of learning data (above-described learning data 13) are automatically retrieved and displayed in path display section 81b. When there are a plurality of files of the learning data, storage destinations and file names of the plurality of files are displayed in path display section 81b. The user can readily designate a target file used for machine learning by performing an operation of placing the cursor on a portion indicating an intended file name and clicking on it. When the user performs, with the target file designated, an operation of placing the cursor on read icon 81c and clicking on it (hereinafter also referred to as a "file read operation"), reading of the target file is started, and a status bar 81d is displayed as a pop-up representation until the reading of the target file is completed. Status bar 81d displays, for example, read information or read time of the target file.

### (2) Selection of Division Method and Division Ratio of Learning Data

A division selection section 82 is displayed below file selection icon 81a. The user can select, according to a display on division selection section 82, a division method and a division ratio of the learning data included in the read target file.

Specifically, division selection section 82 includes a method selection section 82a indicating options for the division method. Fig. 2 shows, as the options for the division method, "Random," which randomly divides the learning data, and "Retain row numbers," which divides the learning data while retaining a sequence of the learning data, with "Random" shown as selected by default. The user does not need to perform any particular operation if the division method may remain the default "Random". The user can readily switch the division method to "Retain row numbers" by performing an operation of placing the cursor on the portion indicating "Retain row numbers" and clicking on it.

Further, division selection section 82 includes a ratio selection section 82b indicating the division ratio as a scroll bar. Fig. 2 shows an example in which a default value of the division ratio (a ratio of the training data to the entire learning data) is set to "80%." The division ratio is generally set to fall between 70 and 90%. The user can arbitrarily change the division ratio by operating the scroll bar of ratio selection section 82b.

### (3) Selection of Explanatory Variable and Objective Variable

A variable selection section 83 is displayed below division selection section 82. Once the reading of the target file is complete, a process of extracting candidate explanatory variables and candidate objective variables from the learning data included in the target file is performed, and title names of the extracted candidate explanatory variables and candidate objective variables are displayed in an explanatory variable selection section 83b and an objective variable selection section 83a, respectively, in a selectable manner.

The user can readily select an explanatory variable by performing an operation of selecting one or more intended explanatory variables from among the candidate explanatory variables displayed in explanatory variable selection section 83b and clicking on it or them (hereinafter also referred to as an "operation of selecting an explanatory variable"). Similarly, the user can readily select an objective variable by performing an operation of selecting one intended objective variable from among the candidate objective variables displayed in objective variable selection section 83a and clicking on it (hereinafter also referred to as an "operation of selecting an objective variable"). The explanatory variable and the objective variable selected by the user are displayed in a selected variable display section 83c. The operation of selecting an explanatory variable and the operation of selecting an objective variable are hereinafter also collectively referred to as a "variable selection operation."

The candidate explanatory variables displayed in explanatory variable selection section 83b can also be added later, and the machine learning result can also be updated based on any added explanatory variable.

### (4) Execution of Machine Learning (Generation of Prediction Model)

A learning execution icon 84 is displayed below variable selection section 83. When the user performs, with selected variable display section 83c displaying the explanatory variable and the objective variable selected by the user, an operation of placing the cursor on learning execution icon 84 and clicking on it (hereinafter also referred to as a "learning execution operation"), machine learning by learning device 6 is executed under learning conditions (the learning data, the explanatory variable, the objective variable, the division method, the division ratio and the like) specified by the user on learning execution screen 70a.

Learning device 6 executes machine learning using the learning conditions specified by the user, to thereby generate a prediction model (above-described prediction model 61) for predicting an objective variable from an explanatory variable. When an explanatory variable is inputted, the prediction model outputs a value of an objective variable corresponding to the inputted explanatory variable, as described above.

Learning device 6 according to the present embodiment generates a plurality of prediction models using a plurality of algorithms for the learning conditions specified by the user. Further, learning device 6 calculates a correlation coefficient (an index indicative of the relation between the explanatory variable and the objective variable) and a determination coefficient (an index indicative of the degree to which the predicted value of the objective variable matches the actual value of the objective variable) for each of the plurality of generated prediction models.

### (5) Display of Learning Result

A result display section 85 indicating a result of the machine learning is displayed below learning execution icon 84. The user can check the result of the machine learning by viewing content displayed in result display section 85. Result display section 85 displays a model name display section 85a, a coefficient display section 85b, a graph display section 85d, and a feature amount display section 85e.

Model name display section 85a displays a name of a prediction model (algorithm) that was used for the learning result displayed in result display section 85. Model name display section 85a displays, by default, a name ("lar" in the example shown in Fig. 2) of a prediction model having the highest determination coefficient (hereinafter also referred to as a "best model") of the plurality of prediction models.

When the user performs an operation of pressing a pull-down button displayed at the right end of model name display section 85a, a pick list 85f is displayed that displays the plurality of algorithms that were used to generate the prediction models in order of accuracy (in descending order of the determination coefficient). By selecting any one of the plurality of prediction models (algorithms) displayed in pick list 85f, the user can change the learning result displayed in result display section 85 to a learning result by the prediction model (selection model) generated by the algorithm selected by the user.

Coefficient display section 85b displays correlation coefficients and determination coefficients of the prediction model displayed in model name display section 85a. Graph display section 85d displays a graph representing a result of analysis by the prediction model displayed in model name display section 85a. Feature amount display section 85e displays a ranking of feature amounts used for the prediction model displayed in model name display section 85a.

### <Utilization Phase (Phase of Utilization of Machine Learning Result)>

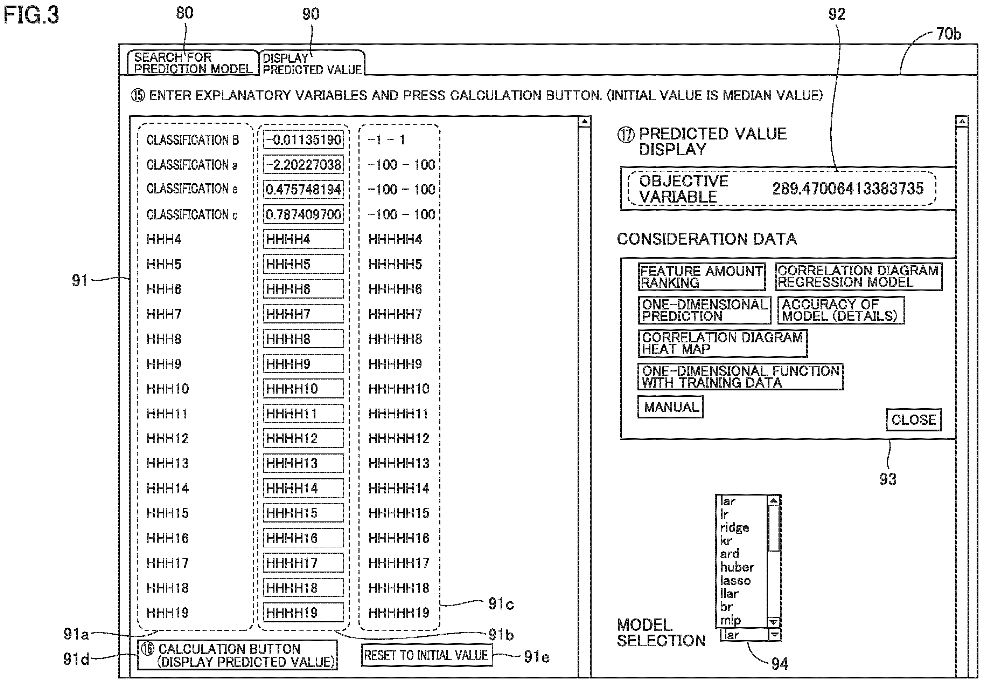

Fig. 3 is a diagram schematically showing an exemplary learning utilization screen 70b displayed on display device 2. When the user performs an operation of selecting tab 90, learning utilization screen 70b shown in Fig. 3 is displayed on the screen of display device 2. The user only needs to perform simple operations according to content displayed on learning utilization screen 70b to calculate (predict), using the prediction model generated in the learning phase, a value of the objective variable for a value of an arbitrary explanatory variable.

Learning utilization screen 70b displays an explanatory variable input section 91, an objective variable display section 92, a consideration data display section 93, and a model selection section 94.

Explanatory variable input section 91 displays a title field 91a, an input field 91b, a range field 91c, a calculation execution icon 91d, and an initial value icon 91e.

Title field 91a, input field 91b, and range field 91c are displayed in this order from the left. Title field 91a vertically displays titles names of a plurality of explanatory variables, and range field 91c displays a minimum value and a maximum value of each explanatory variable. A median value of each explanatory variable is inputted as an initial value to input field 91b. The user can change the value of each explanatory variable in input field 91b from the initial value to an arbitrary value within the range displayed in range field 91c. Fig. 3 shows an example in which, of the items displayed in title field 91a, four items of "classification B," "classification a," "classification e," and "classification c" are objective variables and the other items have fixed values.

Model selection section 94 displays a name of a prediction model used for calculation of the objective variable. Model selection section 94 displays the best model by default. When the user performs an operation of pressing a pull-down button displayed at the right end of model selection section 94, a pick list is displayed that displays the names of the plurality of prediction models that were generated in the learning phase in order of accuracy. By selecting one of the prediction models from the pick list, the user can change the prediction model used for calculation of the objective variable to the prediction model selected by the user.

When the user performs an operation of placing the cursor on calculation execution icon 91d and clicking on it (hereinafter also referred to as a "calculation execution operation"), learning device 6 performs a process of calculating, using the prediction model displayed in model selection section 94, a value of the objective variable for the value of the explanatory variable inputted to input field 91b (hereinafter also referred to as a "calculation process"). The calculated value of the objective variable is displayed in objective variable display section 92. By repeating an operation of changing the value of the explanatory variable inputted to input field 91b and recalculating the value of the objective variable, the user can understand the extent to which the objective variable changes in response to a change in the explanatory variable. If the explanatory variable is a variable related to a material property of a battery and the objective variable is a variable related to a storage characteristic of the battery, for example, the user can predict the extent to which the storage characteristic of the battery will change in response to a change in the material property of the battery. Examples of the material property of the battery include physical properties of a positive electrode, a negative electrode, a separator and an electrolyte solution, and physical properties of materials used for them.

### [Flowchart]

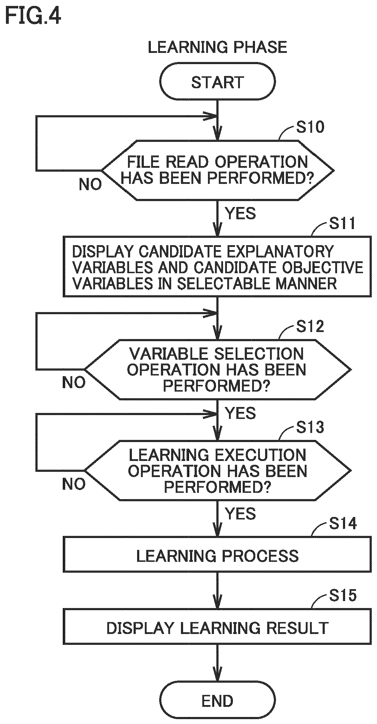

Fig. 4 is a flowchart showing an overview of a procedure executed by learning device 6 in the learning phase. This flowchart is executed when learning execution screen 70a shown in Fig. 2 is displayed on the screen of display device 2.

First, learning device 6 determines whether or not the above-described file read operation has been performed (step S 10). When the file read operation has not been performed (NO in step S 10), learning device 6 repeats the process of step S 10 and waits for the file read operation to be performed.

When the file read operation has been performed (YES in step S10), learning device 6 reads a target file, extracts candidate explanatory variables and candidate objective variables from learning data included in the read target file, and causes display device 2 to display the extracted candidate explanatory variables and candidate objective variables in a manner selectable by the user (step S 11).

Then, learning device 6 determines whether or not the above-described variable selection operation has been performed (step S 12). When the variable selection operation has not been performed (NO in step S 12), learning device 6 repeats the process of step S 12 and waits for the variable selection operation to be performed.

When the variable selection operation has been performed (YES in step S12), learning device 6 determines whether or not the above-described learning execution operation has been performed (step S13). When the learning execution operation has not been performed (NO in step S13), learning device 6 repeats the process of step S13 and waits for the learning execution operation to be performed.

When the learning execution operation has been performed (YES in step S13), learning device 6 performs a learning process of executing machine learning with the above-described content (step S14). Then, learning device 6 causes display device 2 to display a result of the learning process (step S15).

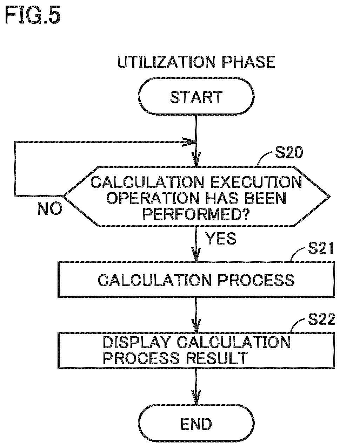

Fig. 5 is a flowchart showing an overview of a procedure executed by learning device 6 in the utilization phase. This flowchart is executed when learning utilization screen 70b shown in Fig. 3 is displayed on the screen of display device 2.

First, learning device 6 determines whether or not the above-described calculation execution operation has been performed (step S20). When the calculation execution operation has not been performed (NO in step S20), learning device 6 repeats the process of step S20 and waits for the calculation execution operation to be performed.

When the calculation execution operation has been performed (YES in step S20), learning device 6 performs the above-described calculation process (step S21). Specifically, learning device 6 calculates, using the prediction model displayed in model selection section 94, a value of the objective variable for the value of the explanatory variable inputted to input field 91b.

Then, learning device 6 causes display device 2 to display a result of the calculation process (step S22).

As described above, machine learning system 1 according to the present embodiment includes display device 2 and learning device 6. Learning device 6 causes display device 2 to display a result of extracting candidate explanatory variables and candidate objective variables from a target file designated by a user, and causes display device 2 to display a result of analyzing, by machine learning, a relation between an explanatory variable and an objective variable selected by the user from among the candidate explanatory variables and the candidate objective variables displayed on display device 2.

According to machine learning system 1 according to the present embodiment, candidate explanatory variables and candidate objective variables included in a target file are displayed on display device 2 by the user simply designating the target file. The user can cause display device 2 to display a result of analysis by machine learning, by performing a simple operation of selecting desired variables from among the candidate explanatory variables and the candidate objective variables displayed on display device 2. Therefore, the user can execute machine learning with simple operations without performing complicated operations such as coding.

Further, in a learning phase, learning device 6 according to the present embodiment generates, by executing machine learning as to the explanatory variable and the objective variable selected by the user according to a plurality of algorithms, a plurality of prediction models, each for predicting an objective variable from an explanatory variable, calculates a determination coefficient of each of the plurality of generated prediction models, and causes display device 2 to display a prediction model having a highest determination coefficient as a best model. Therefore, the user can know the best model with simple operations.

Further, in the learning phase, learning device 6 according to the present embodiment causes display device 2 to display the plurality of algorithms, and causes display device 2 to display information on the best model or information on a selection model, the selection model generated by an algorithm selected by the user from among the plurality of algorithms. Therefore, the user can change the information on the prediction model to be displayed on display device 2 from the information on the best model to the information on the selection model, by performing a simple operation of selecting one of the plurality of algorithms displayed on display device 2.

Further, in a utilization phase, learning device 6 according to the present embodiment obtains an explanatory variable inputted by the user, and causes display device 2 to display a result of calculating, using the best model or the selection model, an objective variable corresponding to the explanatory variable inputted by the user. Therefore, the user can predict a value of the objective variable corresponding to an arbitrary explanatory variable.

Further, in the learning phase, learning device 6 according to the present embodiment obtains a division ratio of training data and test data requested by the user, executes the machine learning by dividing data included in the target file into training data and test data at the obtained division ratio, and causes display device 2 to display a result of the machine learning. Therefore, the user can arbitrarily set the division ratio of training data and test data.

Although the embodiments of the present invention have been described, it should be understood that the embodiments disclosed herein are illustrative and non-restrictive in every respect. The scope of the present invention is defined by the terms of the claims, and is intended to include any modifications within the scope and meaning equivalent to the terms of the claims.

## Claims

1. A machine learning system comprising:
a display device (2); and
a learning device (6) connected to the display device (2), wherein
the learning device (6)
causes the display device (2) to display a result of extracting candidate explanatory variables and candidate objective variables from a target file designated by a user, the candidate explanatory variables each being selectable as an explanatory variable and the candidate objective variables each being selectable as an objective variable, and
causes the display device (2) to display a result of analyzing, by machine learning, a relation between an explanatory variable and an objective variable selected by the user from among the candidate explanatory variables and the candidate objective variables displayed on the display device (2).

2. The machine learning system according to claim 1, wherein
the learning device (6)
generates, by executing machine learning as to the explanatory variable and the objective variable selected by the user according to a plurality of algorithms, a plurality of prediction models, each for predicting an objective variable from an explanatory variable,
calculates a determination coefficient of each of the plurality of generated prediction models, and
causes the display device (2) to display a prediction model having a highest determination coefficient as a best model.

3. The machine learning system according to claim 2, wherein
the learning device (6)
causes the display device (2) to display the plurality of algorithms, and
causes the display device (2) to display information on the best model or information on a selection model, the selection model being a prediction model generated by an algorithm selected by the user from among the plurality of algorithms displayed on the display device (2).

4. The machine learning system according to claim 3, wherein
the learning device (6)
obtains an explanatory variable inputted by the user, and
causes the display device (2) to display a result of calculating, using the best model or the selection model, an objective variable corresponding to the explanatory variable inputted by the user.

5. The machine learning system according to any one of claims 1 to 4, wherein
the learning device (6)
obtains a division ratio of training data and test data requested by the user, and
causes the display device (2) to display a result of executing the machine learning by dividing data included in the target file into training data and test data at the obtained division ratio.

6. The machine learning system according to any one of claims 1 to 4, wherein
the explanatory variable is a variable related to a material of a battery, and the objective variable is a variable related to a characteristic of the battery.

7. A machine learning method comprising:
causing a display device (2) to display a result of extracting candidate explanatory variables and candidate objective variables from a target file designated by a user, the candidate explanatory variables each being selectable as an explanatory variable and the candidate objective variables each being selectable as an objective variable; and
causing the display device (2) to display a result of analyzing, by machine learning, a relation between an explanatory variable and an objective variable selected by the user from among the candidate explanatory variables and the candidate objective variables displayed on the display device (2).
